Europäisches Patentamt

European Patent Office

Office européen des brevets

(19)

(11) Numéro de publication : **0 293 417 B1**

(12)    # FASCICULE DE BREVET EUROPEEN

(45) Date de publication du fascicule du brevet :
04.09.91 Bulletin 91/36

(51) Int. Cl.$^5$ : **C03C 25/02**

(21) Numéro de dépôt : **87907733.7**

(22) Date de dépôt : **09.12.87**

(86) Numéro de dépôt international :
**PCT/CH87/00167**

(87) Numéro de publication internationale :
**WO 88/04284 16.06.88 Gazette 88/13**

(54) **FIBRE OPTIQUE REVETUE D'UN MANCHON METALLIQUE.**

(30) Priorité : 13.12.86 CH 4959/86

(43) Date de publication de la demande :
07.12.88 Bulletin 88/49

(45) Mention de la délivrance du brevet :
04.09.91 Bulletin 91/36

(84) Etats contractants désignés :
**DE FR GB IT NL**

(56) Documents cités :
**Chemical Abstracts, Vol. 101, Nr. 10 September 1984 (Columbus Ohio US) see page 301, abstract 77645a,& JP, A, 5952203 (FUJIKURA CABLE WORKS LTD) 26 March 1984 Patent Abstracts of Japan, Vol. 10, Nr. 103 (C-340) (2160) 18 April 1986 & JP, A, 6023957 (SHINKOU KOUSEN KOGYO K.K.) 21 November 1985**

(73) Titulaire : **BATTELLE MEMORIAL INSTITUTE**
**7 route de Drize**
**CH-1227 Carouge/Genève (CH)**

(72) Inventeur : **KORNMANN, Michel**
**31, chemin des Palettes**
**CH-1212 Grand-Lancy (CH)**

(74) Mandataire : **Dousse, Blasco et al**
**7, route de Drize**
**CH-1227 Carouge/Genève (CH)**

## Description

La présente invention concerne un procédé pour revêtir une fibre optique d'un manchon métallique, notamment d'aluminium.

On sait qu'il est désirable de protéger les fibres obtiques de la corrosion par les agents atmosphériques qui, peu à peu, compromettent ses propriétés de transmission de la lumière et ses qualités de résistance aux efforts mécaniques. Un manchon d'aluminium, d'une épaisseur de l'ordre de 10 à 150 μm d'épaisseur, déposé de préférence par passage de la fibre dans de l'aluminium fondu, lequel adhère à la fibre et se solidifie à son contact, constitue une bonne protection.

Ainsi, le document J-57106.542 (FURUKAWA) décrit-il la mise à nu de fibres optiques (par exemple par combustion de leur manchon protecteur en résine organique) et leur revêtement par de l'aluminium, par passage dans un bain de ce métal en fusion.

Le document J-57071.840 (FURUKAWA) décrit le revêtement de fibres optiques par des métaux par un procédé d'extrusion suivant lequel on maintient le métal de revêtement (alliage Al-Cu) en phase semi-fondue (dans laquelle la proportion de phase solide est de 80-90%). On procède ainsi de manière à réduire, dans la mesure du possible, la température à laquelle on soumet la fibre en contact avec le métal fondu, cette élévation de température ayant une influence néfaste sur ses qualités mécaniques.

Le document J-58074.543 (FUJITSU) divulgue la mise en circulation d'une fibre optique dans un bain de métal fondu (Sn, Al, etc.) en vue de son revêtement par dépôt d'un tel métal, la fibre ainsi revêtue étant instantanément refroidie par aspersion d'eau froide ou par un courant de gaz.

Le document J-58027.977 (FURUKAWA) décrit le placage de matériaux filamentaires, notamment de fibres optiques. Suivant ce procédé, on place un tube chauffable à la surface d'un bain de métal fondu contenu dans un creuset à double paroi, on chauffe le métal au dessus de son point de fusion et le tube à une température légèrement supérieure à celle du métal fondu ; puis on fait circuler le filament dans le tube tout en y réduisant la pression afin de promouvoir une évaporation sous vide. On obtient des couches épaisses de métal de revêtement par cette technique.

Le document J-58045.133 (FUJITSU) divulgue le dépôt de films métalliques sur des fibres optiques sitôt celles-ci étirées. Les métaux utilisés comprennent Al et Sn. évite l'oxydation du métal en opérant sous protection d'un gaz inerte tel que l'azote ou l'argon. Les fibres ainsi obtenues présentent de faibles pertes à la transmission et une résistance à la traction élevée.

Le document J-58045.134 (FUJITSU) décrit le revêtement de fibres optiques par des métaux, le procédé utilisé comprenant la mise en contact des fibres sortant du four d'étirage avec un courant de gaz chaud. Ce courant de gaz appliqué à la fibre alors que le métal de revêtement est encore liquide permet de contrôler l'épaisseur et l'uniformité du revêtement et conduit à des fibres à faibles pertes de transmission.

Le document J-59035.046 (FUJITSU) décrit l'application d'un revêtement métallique sur des fibres optiques par passage de celles-ci à travers un bec ou buse contenant du métal fondu et en soumettant celui-ci à des ultra-sons. Ce traitement convient aux fibres fraîchement étirées et fournit des films métalliques adhérents pouvant être soudés, ce qui permet de relier les fibres entre-elles.

Le document J-60194.041 (SUMITOMO) enseigne de revêtir des fibres optiques d'un film métallique par passages de celles-ci, sous pression réduite, dans du métal en fusion, la température de la fibre étant inférieure ou égale à celle du métal fondu. Après dépôt du métal fondu, on fait passer la fibre dans une filière de calibrage.

Quoique les techniques de l'art antérieur permettent de résoudre un bon nombre de problèmes relatifs au placage des fibres optiques par du métal en fusion, certains subsistent malgré tout, ou bien, certaines des solutions proposées sont difficiles à appliquer et mériteraient d'être simplifiées. En particulier, le contrôle des conditions de placage est toujours difficile à réaliser ainsi que l'homogénéité de l'épaisseur et la régularité du dépôt. Il est notamment difficile, tenu compte des températures respectives de la fibre et du métal en fusion, d'assurer un bon temps de contact entre ces deux éléments pour que le métal adhère bien à la fibre et s'y solidifie sous forme d'un manchon homogène et d'épaisseur régulière.

Le procédé de la présente invention, tel que résumé à la revendication 1, constitue un pas en avant en direction de l'amélioration et de la simplification de la technique de revêtement de fibres de quartz ou verre d'un manchon métallique protecteur.

Un dispositif permettant de mettre en oeuvre le présent procédé est décrit à la revendication 11.

Une forme d'exécution d'un tel dispositif figure, sous forme de coupe schématique, au dessin annexe auquel on se réfère pour la suite de la description.

La figure 1 représente un creuset muni de filières verticales destinées à revêtir une fibre optique d'un manchon métallique protecteur.

La figure 2 représente un détail, à échelle agrandie, d'une des filières du creuset de la figure 1.

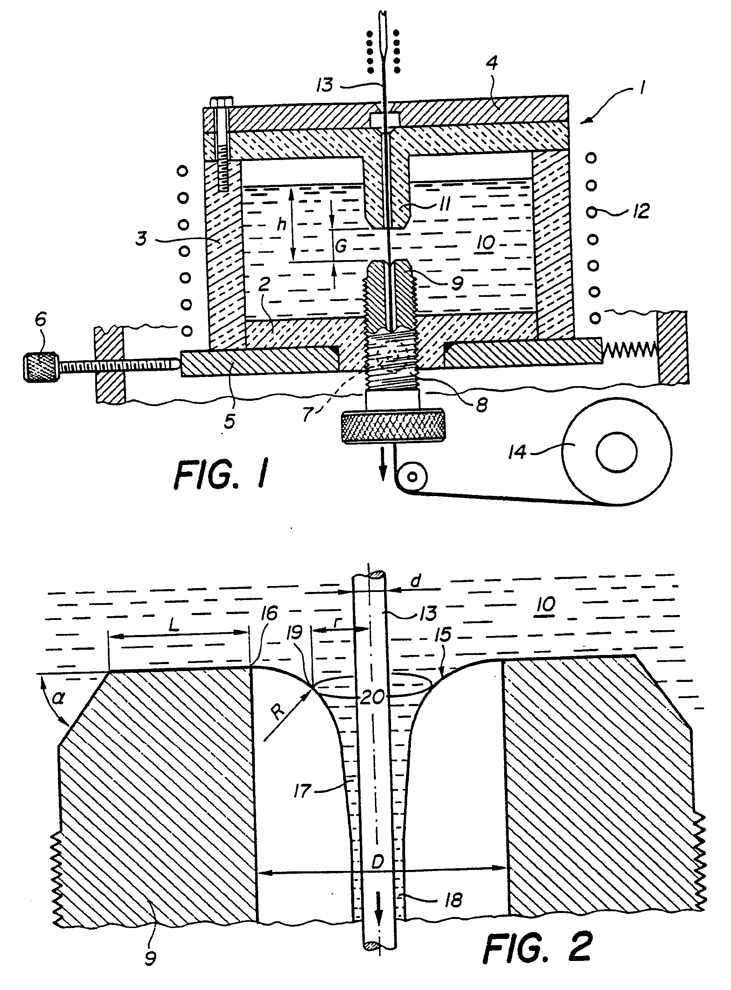

Le dispositif de la figure 1 se compose d'un creuset 1 délimité par un fond 2, des parois 3 et un couvercle 4. Ce creuset repose sur une table horizontale 5 qui peut être déplacée longitudinalement et transversalement par un jeu de vis micrométriques 6 et 7. Le fond du creuset est percé et taraudé de manière à recevoir une filière filetée 8 dont le bec 9, tronconique, pénètre à l'intérieur du creuset 1. Celui-ci est rempli d'aluminium fondu 10.

Le creuset comporte une autre filière 11 disposée dans le couvercle 4 et faisant axialement face au bec 9 de la filière 8. Par le jeu du pas de vis de cette dernière, on peut déplacer le niveau du bec 9, c'est-à-dire la profondeur $\underline{h}$ à laquelle il se trouve plongé dans le métal en fusion ainsi que la distance $\underline{G}$ entre les plats des becs des deux filières ; la filière 8 peut être réglée jusqu'à toucher la filière 11 (G = 0).

Le présent dispositif comprend encore un enroulement de chauffage 12 destiné à maintenir l'aluminium à l'état liquide. Par ailleurs, un système d'étirage d'une fibre optique (non représenté, mais classique) fournit une fibre optique 13 qu'on peut faire circuler à travers les filières 8 et 11 et enrouler sur un accessoire de stockage représenté schématiquement par un tambour 14. On notera que pour éviter le contact de l'air avec la fibre fraîchement étirée, on peut protéger celle-ci par un gaz sec ou inerte, de l'argon par exemple.

La figure 2 représente, à échelle très agrandie, l'embouchure du bec 9 de la filière réceptrice pendant le fonctionnement du dispositif de revêtement. En bref, on fait fondre le métal dans le creuset et le maintient en fusion à une température donnée grâce aux moyens de chauffage 12. On étire une fibre 13, par exemple à partir d'une préforme en barreau (non représenté) et la fait circuler dans les filières 8 et 11 de diamètre intérieur $\underline{D}$, la filière 8 ayant été, au préalable, complètement vissée à toucher la filière 11. Puis, après avoir soigneusement centré la fibre par le jeu des moyens de réglage 6 et 7, on dévisse progressivement la filière 8 jusqu'à créer, entre les filières, un espacement $\underline{G}$ tel que le métal fondu vienne en contact avec la fibre 13 de diamètre $\underline{d}$ qui se déplace en direction de la flèche. Ce mouvement crée, au sein du métal en fusion un ménisque 15 en forme de "vortex" ou d'entonnoir dont le bord 16 épouse l'embouchure du bec 9 et la tige 17 donne naissance et prolonge le manchon protecteur 18 de métal solidifié qui entoure la fibre 13 à la sortie de la filière 8. La génératrice 19 de ce ménisque en forme de "vortex" présente une courbure variable dont le rayon minimal $\underline{R}$ concerne une région annulaire 20 placée à une distance $\underline{r}$ de l'axe du système.

Ces paramètres sont intéressants pour les raisons suivantes : Pour éviter que le métal en fusion ne fuie entre la fibre et les parois du guide de la filière 8 (ou en d'autre termes, pour que se forme un manchon protecteur de métal solidifié régulier et uniforme), il faut, d'après les lois de la tension superficielle, que la pression hydrostatique pgh qui règne au niveau du bec 9 ne dépasse pas la valeur donnée par la relation $\sigma(1/r + 1/R)$.

On peut admettre que r est intermédiaire entre D/2 et d/2. Par exemple si d vaut 100 μm (0.1 mm) et D = 0.4 mm, r est voisin de 0.1 mm. Pour une vitesse de circulation de la fibre de l'ordre de 30 m/min (50 cm/sec), R est environ 0.2 mm, d'où $1/r + 1/R = 150$ cm$^{-1}$ et, dans l'aluminium en fusion ($\rho = 2.7$ ; $\sigma = 914$ d/cm), h ≤ $914 \times 150/2.7 \times 981 \simeq 52$ cm. On opère donc avantageusement à une profondeur de 1.5 à 10 cm dans l'aluminium en fusion. Cependant, $\underline{h}$ peut être supérieur ou inférieur à ce domaine.

Il est cependant à remarquer qu'une telle évaluation doit être complétée en tenant compte du facteur dynamique créé par le mouvement de la fibre elle-même. Une telle "pression" est donnée par la relation $\rho v^2/2$ où $\underline{v}$ est la vitesse de la fibre en cm/sec. Dans le cas ci-dessus, on aura donc $h = v^2/2\, g = 1.3$ cm ce qui est négligeable par rapport aux valeurs de $\underline{h}$ évaluées ci-dessus.

De manière générale, on a trouvé que pour revêtir une fibre optique d'un calibre de 50 à 200 μm en général, on peut utiliser une filière dont le diamètre intérieur est compris entre 200 et 1000 μm. On opère avantageusement à une profondeur $\underline{h}$ de l'ordre de 2 à 10 cm. En faisant varier G, l'écartement entre les plats des filières tronconiques, entre environ 0.5 et 5 mm, on peut régler l'épaisseur du manchon d'aluminium entre environ 10 et 150 μm.

Il est à remarquer que si, en principe, on a avantage à laisser aussi peu de jeu que possible entre la fibre et le guide de la filière, celui-ci ne devrait pas être inférieur à 20-100 μm environ ; en effet, au dessous, le centrage de la fibre est excessivement difficile.

Par ailleurs, on peut contrecarrer la tendance éventuelle du métal à former des fuites et des irrégularités dans la filière 9 (cas où on ménage un jeu important entre la fibre et celle-ci) en appliquant une dépression de gaz en amont de la filière 11 ou une surpression en aval de la filière 8, le creuset étant alors partie d'une enceinte étanche comportant un compartiment supérieur (où la fibre est débitée) et un compartiment inférieur où la fibre revêtue est stockée. On peut opérer sous atmosphère inerte (azote, argon, etc.) ou dans l'air, la surpression concernant le compartiment supérieur et la dépression concernant le compartiment inférieur. Des variations de pression de l'ordre de 0.05 à 0.5 bar sont applicables.

Dans le présent procédé, le préchauffage de la fibre avant plaçable n'est pas critique. De manière générale, lorsque la station d'étirage se trouve à une distance suffisante du creuset, par exemple entre 0.5 et 2 m, la fibre acquiert, par refroidissement, une température appropriée pour son revêtement par l'aluminium. A défaut, par exemple si ma fibre n'est pas étirée in-situ, on peut prévoir un préchauffage à 300-400°C avant placage. De préférence la différence de température ΔT entre la fibre et le métal en fusion est comprise entre 100 et

650°C.

La température de l'aluminium fondu doit être contrôlée entre certaines limites. Elle peut varier, par exemple entre 660 et 750°C, mais les résultats ne sont pas identiques pour toutes les valeurs de cet intervalle. Aux températures inférieures, la solidification peut être trop rapide et le dépôt peut devenir irrégulier ou même bloquer le passage de la fibre. Aux températures trop élevées, le revêtement est trop mince ou a tendance à couler. L'intervalle de température qu'on préfère est de 663 à 690°C.

Le présent procédé s'applique au revêtement des fibres optiques en quartz ou autre minéral transparent d'indice de réfraction fixe ou variable radialement.

Le remplissage du creuset peut se faire en discontinu ou en continu. Dans ce dernier cas, l'apport de métal se fait sous forme d'un fil dont la fusion progressive compense le métal déposé sur la fibre et dont le débit maintient le niveau du liquide constant dans le creuset.

On notera encore que dans la construction des filières illustrée à titre d'exemple au dessin la largeur L de la portion plate des troncs de cône des filières peut être comprise entre environ 0.5 et 5 mm ; l'angle de pente de la portion tronconique peut être compris entre environ 40 et 75°. Pour refroidir la fibre à la sortie de la filière réceptrice 8, on peut utiliser l'atmosphère ambiante ou un jet d'air froid ou de liquide réfrigérant.

Les exemples suivants illustrent l'invention.

On a opéré au moyen d'une installation comprenant une station d'étirage de fibres de verre à partir d'une préforme, c'est-à-dire un barreau de silice de type HERASIL I (Heraeus, Wisag), diamètre 12 mm, longueur 50 cm qu'on a étiré au moyen d'un four à induction de modèle ordinaire (temperature d'étirage 2000-2200°C).

Pour le placage, on a utilisé un creuset de graphite, tel que celui représenté au dessin (placé à 1.20 m de la station d'étirage), contenant 250 g d'aluminium. Les filières 8 et 11 sont usinés dans une céramique spéciale, type "MACOR" non mouillable et non corrodable par l'aluminium en fusion. La filière supérieure est fixe ; la filière inférieure 8 est réglable en hauteur (de manière à faire varier G antre zéro et environ 10 mm). Grâce à son pas de vis, on peut faire tourner cette filière. Le guide intérieur des filières a 0.5 mm de diamètre.

On commence par rapprocher les filières jusqu'à ce qu'elles se touchent par leur face plane, on fond l'aluminium (puissance du four 12 = 4 KW) et on règle sa température. On fait passer la fibre dans la filière à la vitesse choisie et on l'enroule sur le tambour 14, la fibre prenant appui sur une poulie non représentée au dessin. Puis on écarte les filières en dévissant la filière 8 jusqu'à une valeur choisie, de manière que l'aluminium fondu se dépose sur la fibre et l'entoure du manchon désiré. Pour interrompre la formation du manchon, on rapproche à nouveau les filières. En général, vu la vitesse de défilement de la fibre, le temps pendant lequel elle est en contact avec le métal en fusion entre les filières est de l'ordre de $10^{-2}$ à $10^{-4}$ sec.

Le tableau ci-dessous résume les paramètres opératoires utilisés pour une série d'essais 1 à 7 ainsi que les résultats obtenus. Les valeurs du tableau concernent, dans l'ordre : le No de l'essai, le diamètre en μm de la fibre soumise au revêtement, la vitesse de son défilement en m/min, la valeur en mm de l'écartement G entre les filières, le temps de contact, en millisecondes, entre la fibre et le métal en fusion, la température de celui-ci en °C, l'épaisseur du manchon en μm et la tension de rupture de la fibre revêtue en N/mm².

| 1 | 130 | 30 | 1.87 | 3.7 | 666-669 | 20 | 2044 |
| 2 | 130 | 30 | 1.87 | 3.7 | 661-662 | 20 | 2414 |
| 3 | 135 | 50 | 2.25 | 2.7 | 673 | 20 | 1364 |
| 4 | 180 | 30 | 2.25 | 4.5 | 667 | 20 | 1360 |
| 5 | 130 | 50 | 2.25 | 2.7 | 663 | 20 | 1580 |
| 6 | 134 | 30 | 1.87 | 3.7 | 676 | 17 | 2032 |
| 7 | 120 | 30 | 4.5 | 9.0 | 685 | 15 | 2978 |

Par ailleurs, on a soumis les fibres ainsi revêtues à un test de corrosion en les enroulant sur des mandrins (diamètre 6 et 9 mm) et en les soumettant 10 jours à une température de 60°C dans une atmosphère humide au taux de 90% (humidité relative). Après ce temps, les contrôles étaient tous brisés alors que les fibres protégées avaient résisté à la corrosion.

**Revendications**

1. Procédé pour déposer sur une fibre optique fraîchement étirée de diamètre $\underline{d}$ un manchon protecteur d'aluminium, suivant lequel on fait passer cette fibre, centrée symétriquement, à travers deux filières à bec tronconique partiellement mouillable par le métal fondu l'une débitrice et l'autre réceptrice, superposées face à face verticalement et coaxialement, et immergées dans un bain d'aluminium fondu à une distance l'une de l'autre suffisante pour que le métal fondu entre en contact avec la fibre dans l'espace situé entre les faces planes des becs des filières et, en se solidifiant à son contact, forme ledit manchon protecteur, caractérisé par le fait que, les filières étant mobiles axialement l'une par rapport à l'autre, on commence par les réunir par leur face plane, on liquéfie le métal, on met la fibre en circulation à travers les filières à une vitesse de 5 à 200 m/min et on les écarte progressivement jusqu'à une valeur G comprise entre 0.5 et 5 mm, le jeu D-d entre la fibre et l'alésage des filières étant de 50 à 750 µm, de manière que se forme ledit manchon, l'épaisseur de ce dernier étant de 10 à 50 µm.

2. Procédé suivant la revendication 1, l'aluminium fondu formant, au contact de la fibre, un ménisque en entonnoir dont le bord affleure l'embouchure du bec de la filière réceptrice et dont l'extrémité inférieure, où s'effectue la solidification du manchon, se raccorde avec celui-ci, caractérisé par le fait que, pour éviter des fuites de métal en fusion à la sortie de la filière réceptrice, la distance r entre l'axe de la filière et la zone annulaire où le ménisque présente la courbure la plus prononcée est inférieure au rayon de courbure R de cette zone.

3. Procédé suivant la revendication 2, caractérisé par le fait que l'embouchure de la filière réceptrice est immergée dans le métal en fusion à une profondeur h de 1.5 à 10 cm.

4. Procédé suivant la revendication 1, caractérisé par le fait que la température de l'aluminium en fusion est maintenue entre 660 et 750°C, de préférence entre 663 et 690°C.

5. Procédé suivant la revendication 4, caractérisé par le fait que l'épaisseur du manchon de revêtement varie en fonction de la température du bain d'aluminium et de l'écartement G entre les filières.

6. Procédé suivant la revendication 4, charactérisé par le fait que la différence de température $\Delta T$ entre la fibre qui vient en contact avec le métal en fusion et celui-ci est comprise entre 100°C et 650°C.

7. Procédé suivant la revendication 1, caractérisé par le fait qu'on étire la fibre optique à partir d'une préforme en barreau.

8. Procédé suivant la revendication 1, caractérisé par le fait que la pression de gaz autour de la fibre dans la filière débitrice est inférieure à celle régnant dans la filière réceptrice.

9. Procédé suivant la revendication 1, caractérisé par le fait que le bain de métal fondu est alimenté en continu par un fil de ce métal qui pénètre dans le bain progressivement au fur et à mesure de sa fusion.

10. Procédé suivant la revendication 1, caractérisé par le fait qu'à la sortie de la filière réceptrice, on refroidit la fibre et on l'enroule, pour la stocker, sur un mandrin.

11. Dispositif pour mettre en oeuvre le procédé suivant la revendication 1, comprenant essentiellement les éléments suivants :

a) un creuset en graphite rempli d'Al et muni de moyens pour fondre cet aluminium et maintenir celui-ci en fusion, ce creuset présentant un fond et un couvercle percés adaptés de manière à recevoir des filières, respectivement réceptrices et débitrices d'une fibre optique qui les traverse ;

b) un support horizontal du creuset en forme de table déplaçable en X et en Y par des moyens micrométriques et permettant de positionner ce creuset ;

c) des filières à bec tronconique, faites en une matière non mouillable ou seulement partiellement mouillable par le métal en fusion, s'adaptant dans les trous, respectivement, du fond et du couvercle du creuset, de manière à se faire axialement face à l'intérieur de celui-ci, l'une d'elles, au moins, pouvant être déplacée axialement par rapport à l'autre jusqu'à la toucher, par exemple à la façon d'une vis ;

d) des moyens pour engendrer, par étirage à chaud, la formation d'une fibre optique ; des moyens pour faire circuler cette fibre à travers lesdites filières de manière que, dans l'intervalle entre celles-ci, elle vienne en contact avec le métal en fusion et, par solidification de celui-ci, se recouvre d'une couche protectrice ; et des moyens pour refroidir la fibre ainsi plaquée et l'enrouler sur un support.

12. Dispositif suivant la revendication 1, caractérisée par le fait que les moyens pour maintenir le métal en fusion dans le creuset sont constitués par un four à induction.

13. Dispositif suivant la revendication 11, caractérisé par le fait que la matière des filières est une céramique usinable ayant tendance à repousser le métal en fusion tout au moins en partie.

14. Dispositif suivant la revendication 11, caractérisé par le fait que l'angle de la pente du tronc de cône des filières est compris entre 40 et 75°.

## Claims

1. A process for depositing on a freshly, drawn optical fiber of the diameter d a protective aluminum sleeve, according to which this fiber is symmetrically centrally passed through two dies with a truncated nose piece partially wettable by the melted metal, one of which being the supplying die and the other one being the receiving die, said dies being vertically and coaxially superposed opposite one another and immersed in a melted-aluminum bath at a distance from one another that is sufficient for having the melted metal come in contact with the fiber in the space located between the plane faces of the nose pieces of the dies and solidify by contact with the fiber to form said protective sleeve, characterized in that, since the dies are axially movable with respect to one another, they are first brought together, their plane faces touching each other, then the metal is liquified, the fiber is set into circulation through the dies at a speed of 5 to 200 m/min. and these dies are propressively separated from one another up to a distance G between them of 0.5 and 5 mm, the play D-d between the fiber and the bore of the dies being 50 to 750 µm, such that said sleeve is formed, the thickness of the latter being 10 to 50 µm.

2. A process according to Claim 1, the melted aluminum forming, on contact with the fiber, a funnel shaped meniscus the edge of which is flush with the mouth of the nose piece of the receiving die and the lower end of which, where the solidifying of the sleeve takes place, is joined to the latter, characterized in that, in order to avoid leaks of the melted metal at the outlet of the receiving die, the distance $r$ between the axis of the die and the annular zone where the meniscus has the most arcuate curvature is smaller than the radius R of curvature $R$ of this zone.

3. A process according to Claim 2, characterized in that the mouth of the receiving die is immersed in the molten metal at a depth h of 1.5 to 10 cm.

4. A process according to Claim 1, characterized in that the temperature of the melted aluminum is maintained between 660 and 750°C, preferably between 663 and 690°C.

5. A process according to Claim 4, characterized in that thickness of the coating sleeve varies as a function of the temperature of the aluminum bath and of the distance G between the dies.

6. A process according to Claim 4, characterised in that the temperature difference T between the fiber which comes into contact with the molten metal and the metal is between 100°C and 650°C.

7. A process according to Claim 1, characterised in that the optical fiber is drawn from a rod preform.

8. A process according to Claim 1, characterised in that the gas pressure around the fiber in the dispensing die is lower than that existing in the receiving die.

9. A process according to Claim 1, characterised in that the molten metal bath is replenished continuously by a wire of this metal which progressively penetrates the bath in proportion to its being melted.

10. A process according to Claim 1, characterised in that, at the outlet of the receiving die, the fiber is cooled and, for the purpose of storage, is wound onto a mandrel.

11. A device for implementing the process according to Claim 1, comprising essentially the following elements

a) a graphite crucible filled with Al and provided with means for melting this aluminum and maintaining it in a molten state, this crucible having a bottom and a pierced cover adapted to receive dies, which respectively receive and dispense an optical fiber which moves therethrough,

b) a horizontal support of the crucible in the form of a table which can be moved along the X and Y axis by micrometrical devices which permit a positioning of the crucible,

c) dies with a frusto-conical nose piece, made of a material non-wettable or only partially wettable by the molten metal, fitting into the holes of the bottom and of the cover of the crucible, respectively, in such a manner that they are axially in opposite relation in the interior thereof, at least one of them being able to be axially moved with respect to the other one until it touches it, for example in the manner of a screw,

d) means for producing, by means of hot-drawing, the formation of an optical fiber, means for circulating this fiber through said dies such that, in the space between them, it comes into contact with the molten metal, and due to the solidifying of this metal, it becomes coated by a protective layer, and means for cooling the fiber thus plated and for winding it on a support.

12. A device according to Claim 1, characterized in that the means for maintaining the metal in a molten state in the crucible are constituted by an induction furnace.

13 A device according to Claim 11, characterized in that the material of the dies is a machinable ceramic having the property to completely or partially repel the melted metal.

14. A device according to Claim 11, characterized in that the angle of the slope of the frustrum of the cone of the dies is between 40 and 75°.

**Patentansprüche**

1. Verfahren zum Aufbringen einer Schutzhülse aus Aluminium auf eine soeben gezogene optische Glasfaser mit dem Durchmesser d, gemäß welchem die symmetrisch zentrierte Glasfaser durch zwei Düsen mit kegelstumpfförmigem, teilweise durch das geschmolzene Metall benetzbarem Mundstück geführt wird, von denen die eine abgibt und die andere aufnimmt, und die vertikal einander gegenüber und zueinander koaxial übereinander angeordnet sind und in ein geschmolzenes Aluminiumbad in einem so großen Abstand voneinander eingetaucht sind, daß das geschmolzene Metall in dem Raum zwischen den ebenen Flächen der Mundstücke der Düsen mit der Glasfaser in Kontakt tritt und, indem es sich in ihrem Kontakt verfestigt, die Schutzhülse bildet, dadurch gekennzeichnet, daß bei zueinander koaxial beweglichen Düsen diese zunächst mit ihrer ebenen Fläche vereinigt werden, das Metall verflüssigt wird, die Glasfaser durch die Düsen mit einer Geschwindigkeit von 5 bis 200 m/min in Umlauf gesetzt wird und sie allmählich bis zu einem Wert G von 0,5 bis 5 mm voneinander entfernt werden, wobei das Spiel D-d zwischen der Glasfaser und der Bohrung der Düsen 50 bis 750 µm beträgt, so daß sich die Hülse bildet, wobei ihre Dicke 10 bis 50 µm beträgt.

2. Verfahren nach Anspruch 1, bei welchem das geschmolzene aluminium in Kontakt mit der Glasfaser einen trichterförmigen Meniskus bildet, dessen Rand mit der Mündung des Mundstücks der aufnehmenden Düse bündig ist und dessen unteres Ende, an dem die Verfestigung der Hülse stattfindet, an diese anschließt, dadurch gekennzeichnet, daß der Abstand r zwischen der Achse der Düse und der ringförmigen Zone, in der der Meniskus die stärkste Krümmung besitzt, zur Vermeidung des Austretens von geschmolzenem Metall am Ausgang der Aufnahmedüse kleiner als der Krümmungsradius R dieser Zone ist.

3. Verfahren nach Anspruch 2, dadurch gekennzeichnet, daß die Mündung der aufnehmenden Düse in das geschmolzene Metall in eine Tiefe h von 1,5 bis 10 cm eingetaucht ist.

4. Verfahren nach Anspruch 1, dadurch gekennzeichnet, daß die Temperatur des geschmolzenen Aluminiums auf 660 bis 750°C, vorzugsweise auf 663 bis 690°C, gehalten wird.

5. Verfahren nach Anspruch 4, dadurch gekennzeichnet, daß die Dicke der Beschichtungshülse in Abhängigkeit von der Temperatur des Aluminiumbades und des Abstandes G zwischen den Düsen variiert.

6. Verfahren nach Anspruch 4, dadurch gekennzeichnet, daß die Temperaturdifferenz $\Delta T$ zwischen der Faser, die mit dem geschmolzenen Metall in Kontakt kommt, und diesem zwischen 100°C und 650°C liegt.

7. Verfahren nach Anspruch 1, dadurch gekennzeichnet, daß die optische Glasfaser ausgehend von einer Stab-Vorform gezogen wird.

8. Verfahren nach Anspruch 1, dadurch gekennzeichnet, daß der in der abgebenden Düse um die Glasfaser herum herrschende Gasdruck kleiner als der in der aufnehmenden Düse herrschende Druck ist.

9. Verfahren nach Anspruch 1, dadurch gekennzeichnet, daß das flüssige Metallbad kontinuierlich mit einem Draht aus diesem Metall gespeist wird, der in das Bad allmählich im Maße seiner Schmelzung eintritt.

10. Verfahren nach Anspruch 1, dadurch gekennzeichnet, daß die Glasfaser am Ausgang der aufnehmenden Düse gekühlt und zur Lagerung auf einen Dorn aufgerollt wird.

11. Vorrichtung zur Durchführung des Verfahrens nach Anspruch 1, bestehend im wesentlichen aus den folgenden Bauteilen:

a) einem mit Al gefüllten Graphittiegel, der mit Einrichtungen versehen ist, um das Aluminium zu schmelzen und flüssig zu halten, und einen Boden und einen Deckel besitzt, die durchbohrt sind und zur Aufnahme von Düsen zur Aufnahme bzw. Abgabe einer sie durchquerenden optischen Glasfaser ausgebildet sind,

b) einem horizontalen Halter für den Tiegel in Form eines Tisches, der in der X- und der Y-Achse durch Mikrometereinrichtungen beweglich ist, die die Positionierung des Tiegels gestatten,

c) Düsen mit kegelstumpfförmigem Mundstück, die aus einem durch das geschmolzene Metall nicht oder nur teilweise benetzbaren Werkstoff bestehen und in die Löcher des Bodens bzw. des Deckels des Tiegels so eingepaßt sind, daß sie sich im Inneren des Tiegels axial einander gegenüberstehen, wobei mindestens eine von ihnen axial bezüglich der anderen beispielsweise nach der Art einer Schraube beweglich ist, bis sie diese berührt,

d) Einrichtungen zur Bildung einer optischen Glasfaser durch Warmziehen, Einrichtungen, die die Glasfaser durch die Düsen so in Umlauf bringen, daß sie in dem Zwischenraum zwischen diesen mit dem geschmolzenen Metall in Kontakt kommt und durch Erstarren dieses Metalls mit einer Schutzschicht bedeckt wird, und Einrichtungen zum Kühlen der beschichteten Glasfaser und zum Aufwickeln der Glasfaser auf einen Träger.

12. Vorrichtung nach Anspruch 1, dadurch gekennzeichnet, daß die Einrichtungen, die das Metall in dem Tiegel im flüssigen Zustand halten, aus einem Induktionsofen bestehen.

13. Vorrichtung nach Anspruch 11, dadurch gekennzeichnet, daß die Düsen aus einer bearbeitbaren Keramik bestehen, die dazu neigt, das geschmolzene Metall zumindest zum Teil abzustoßen.

14. Vorrichtung nach Anspruch 11, dadurch gekennzeichnet, daß der Neigungswinkel des Kegelstumpfes der Düsen zwischen 40 und 75° beträgt.

**FIG. 1**

**FIG. 2**